# EUROPEAN PATENT APPLICATION

(11) **EP 4 495 163 A1**
(43) Date of publication of application: **22.01.2025**
(21) Application number: 23770605.6
(22) Date of filing: 08.03.2023
(51) Int. Cl.: C08G 63/183, B01D 15/00, B29B 17/02, C08J 11/24

(54) **RECYCLED POLYESTER RESIN OBTAINED BY USING COLORED PET FABRIC AS MATERIAL, AND METHOD FOR OBTAINING ESTER MONOMER FROM COLORED PET FABRIC**

(30) Priority: 15.03.2022 JP 2022039894
(71) Applicant: Toray Industries, Inc., Tokyo 103-8666 (JP)
(72) Inventor: WATARI, Ippei, Mishima-shi, Shizuoka 411-8652 (JP); MAKINO, Masataka, Mishima-shi, Shizuoka 411-8652 (JP)
(74) Representative: Kador & Partner Part mbB
(86) International application number: PCT/JP2023/008940
(87) International publication number: WO 2023/176649

(57) **Abstract**

A recycled polyester resin obtained by using colored PET fabric as a material, the recycled polyester resin being a polyethylene terephthalate resin comprising 88-100 mol% of a terephthalic acid residue with respect to all acid components, and 88-100 mol% of an ethylene glycol residue with respect to all diol components, wherein the polyethylene terephthalate resin has (1) a diethylene glycol percentage content of not less than 0.1 mass% but less than 0.8 mass%, (2) a nitrogen atom percentage content of 0.5-15.0 mass ppm, and (3) a b-value in the Hunter color tone of not less than -10.0 but less than 5.0.

## Description

### TECHNICAL FIELD

The present invention relates to a recycled polyester resin using a colored PET fabric as a raw material and a method for obtaining an ester monomer from a colored PET fabric, and mainly relates to the recycled polyester resin using a colored PET fabric as a raw material.

### BACKGROUND ART

Until now, a social system of mass production, mass consumption, and mass waste has been maintained, but various adverse effects on the environment, such as the depletion of natural resources and the destruction of nature associated with resource extraction, have been identified. Therefore, in order to make efficient use of limited resources and continue sustainable growth, it has become essential to build a circular social system in which resources are reused and recycled such that waste generation is minimized and the generated waste is not a burden on the environment.

In order to implement such a circular social system, it is necessary to construct a recycling system such as thermal recycling, material recycling, and chemical recycling. Among them, attention is being drawn to a chemical recycling technique, which can recycle waste plastics down to the raw material monomer units and then use the obtained recycled monomers to recover plastic materials having equivalent quality.

Since polyester fibers are inexpensive and are excellent in mechanical properties and dry feeling, there is an increasing need for recycling for the polyester fibers used in a wide range of applications, and various methods have been proposed so far as the chemical recycling technique.

For example, in Patent Literature 1, a chemical recycling technique has been proposed in which clothing of colored polyethylene terephthalate (PET) fibers is used to perform depolymerization and evaporative purification of bis (2-hydroxyethyl) terephthalate (BHET) which is a monomer after the depolymerization.

In Patent Literatures 2 and 3, chemical recycling techniques in which fabric made of colored polyethylene terephthalate fibers is used to perform dye extraction, depolymerization, and filtration and purification using activated carbon has been proposed.

### CITATION LIST

### PATENT LITERATURE

Patent Literature 1: JP2020-176258A
Patent Literature 2: JP2005-330444A
Patent Literature 3: JP2005-255963A

### SUMMARY OF INVENTION

### TECHNICAL PROBLEM

However, in the chemical recycling techniques of Patent Literatures 1 to 3, the dye in the fibers is not sufficiently extracted in advance. For example, in Patent Literature 1, there has been a problem that it is necessary to perform advanced purification such as <BHET evaporation purification step> disclosed in Examples in Patent Literature 1 and molecular distillation in "distillation treatment" disclosed in Examples in Patent Literatures 2 and 3. Further, there has been a problem in that a color tone of a finally obtained PET resin is inferior to that of a PET resin produced from a virgin raw material even when the advanced purification is performed.

To solve the problems in the related art, an object of the present invention is to provide a recycled polyester resin having excellent heat resistance and dry property and having an equivalent color tone as compared with that of a PET resin made from a virgin raw material, by using, as a raw material, an ester monomer (BHET) having excellent color tone by sufficiently performing extraction of a coloring component before a depolymerization step and even by using simple purification steps such as an activated-carbon treatment, filtration, and crystallization after the depolymerization.

### SOLUTION TO PROBLEM

The problem described above is solved by the following [1] to [9].
[1] A recycled polyester resin using a colored PET fabric as a raw material, in which the recycled polyester resin is a polyethylene terephthalate resin containing a terephthalic acid residue of 88 mol% or more and 100 mol% or less with respect to a total acid component and an ethylene glycol residue of 88 mol% or more and 100 mol% or less with respect to a total diol component and satisfying the following features (1) to (3).
   (1) A diethylene glycol content is 0.1% by mass or more and less than 0.8% by mass.
   (2) A nitrogen atom content is 0.5 ppm by mass or more and 15.0 ppm by mass or less.
   (3) A Hunter color tone: b value is - 10.0 or more and less than 5.0.
[2] The recycled polyester resin according to [1], satisfying the following features (4) and (5).
   (4) A Hunter color tone: L value is 70.0 or more and less than 85.0.
   (5) A Hunter color tone: a value is - 2.0 or more and 2.0 or less.
[3] The recycled polyester resin according to [1], further satisfying the following features (6) and (7).
   (6) A temperature-rise crystallization temperature, which is observed when performing isothermal holding at 280°C for five minutes, quenching to room temperature at a speed of 100°C/min or more, and then heating from 20°C to 280°C at a temperature-rise speed of 16°C/min using a differential scanning calorimeter, is 140°C or more and less than 150°C.
   (7) A temperature-falling crystallization temperature, which is observed when performing isothermal holding at 280°C for five minutes and then cooling at a temperature-rise speed of 16°C/min, is more than 190°C and 205°C or less.
[4] A polyethylene terephthalate molded article made by using the recycled polyester resin according to [1] or [3].
[5] A method for obtaining an ester monomer by using a colored PET fabric, the method including the following steps (1) to (3).
   (1) A step of bringing a heated EG into contact with the colored PET fabric to extract a coloring component, the step including the following steps (a) and (b):
      (a) A step of bringing EG vapor into contact with the colored PET fabric;
      (b) A step of bringing the heated EG of 185°C or more into contact with the colored PET fabric
   (2) A step of depolymerizing the PET fabric after extracting the coloring component to obtain an EG solution containing the ester monomer
   (3) A purification step of purifying the EG solution containing the ester monomer to obtain the ester monomer
[6] The method for obtaining an ester monomer according to [5], in which a step of purifying the EG solution containing the ester monomer (BHET) obtained by the depolymerization to obtain a purified BHET consists of the following steps (A) to (D).
   (A) A step of removing the EG from the EG solution containing the BHET after the depolymerization to a range of 0% by mass or more and 5% by mass or less to recover the BHET
   (B) A step of dissolving the recovered BHET in hot water of 85°C or more and 100°C or less, followed by hot filtration, after the step described in (A) is performed
   (C) A step of cooling a filtration solution of 85°C or more and 100°C or less to 30°C or less, and crystallizing and recovering the ester monomer, after the step described in (B) is performed
   (D) A step of performing an activated-carbon treatment or an ion-exchange treatment in a state where the ester monomer is dissolved in hot water in any of the steps (B) and (C)
[7] The method for obtaining an ester monomer according to [5] or [6], in which a peak area, which is observed in a range of 450 nm to 800 nm by a spectrophotometer, is 20 or less as a coloring component amount in the obtained ester monomer.
[8] The method for obtaining an ester monomer according to [5] or [6], in which the PET fabric after extracting the coloring component is depolymerized by the EG of 2.0 parts by mass or more and 10.0 parts by mass or less with respect to 1 part by mass of the PET fabric.
[9] The method for obtained an ester monomer according to [5] or [6], in which a sulfur atom amount, which is contained in 100 parts by mass of the colored PET fabric, is 0.01 parts by mass or more and 0.83 parts by mass or less.

### ADVANTAGEOUS EFFECTS OF INVENTION

According to the present invention, a recycled polyester resin using a colored PET fabric as a raw material and having excellent heat resistance and dry property compared to those of a PET resin produced from a virgin raw materials according to a known method can be provided by obtaining an ester monomer (BHET) having an excellent color tone only by performing simple purification steps such as filtration and crystallization and then polymerizing the ester monomer.

### DESCRIPTION OF EMBODIMENTS

Hereinafter, the present invention will be described in detail.

In the present specification, "weight" and "mass", "% by weight" and "% by mass", and "parts by weight" and "parts by mass" are treated as synonyms.

In the present specification, "room temperature" means 25°C.

A recycled polyester resin according to one embodiment of the present invention using a colored PET fabric as a raw material is a recycled polyester resin that is a polyethylene terephthalate resin containing terephthalic acid residues of 88 mol% or more and 100 mol% or less with respect to total acid components and ethylene glycol residues of 88 mol% or more and 100 mol% or less with respect to total diol components, in which (1) a diethylene glycol content is 0.1% by mass or more and less than 0.8% by mass, (2) a nitrogen atom content is 0.5 ppm by mass or more and 15.0 ppm by mass or less, and (3) Hunter color tone: b value is - 10.0 or more and less than 5.0.

An object of the present invention is to provide a PET fiber raw material that is inexpensive and excellent in mechanical properties and dry feeling. Therefore, it is essential that the recycled polyester resin contains the terephthalic acid residues of 88 mol% or more and 100 mol% or less with respect to the total acid components and contains the ethylene glycol residues of 88 mol% or more and 100 mol% or less with respect to the total diol components.

From a point of a PET fiber having higher purity, a constituting ratio of the terephthalic acid residues is preferably 90 mol% or more, more preferably 95 mol% or more, still more preferably 98 mol% or more, and most preferably 99.5 mol% or more. Similarly, a constituting ratio of the ethylene glycol residues is preferably 90 mol% or more, more preferably 95 mol% or more, still more preferably 98 mol% or more, and most preferably 99.5 mol% or more.

In the recycled polyester resin according to the present embodiment, the diethylene glycol content is 0.1% by mass or more and less than 0.8% by mass. The lower the diethylene glycol content is, the higher the softening point and melting point of the PET resin are, and the more excellent the heat resistance is. Therefore, it is essential that the diethylene glycol content is less than 0.8% by mass. From a point of further improving the heat resistance, the diethylene glycol content is preferably 0.3% by mass or less, and more preferably 0.2% by mass or less. Since the diethylene glycol is inevitably produced as a by-product in a process of obtaining a PET resin by polycondensing the BHET, it is difficult to make the content thereof less than 0.1% by mass.

When a PET resin is produced from terephthalic acids and ethylene glycols as virgin raw materials according to a known method without particularly through a purification step, it is difficult to make the diethylene glycol content less than 0.8% by mass.

In the recycled polyester resin according to the present embodiment, the nitrogen atom content is 0.5 ppm by mass or more and 15.0 ppm by mass or less. A nitrogen atom is derived from a coloring component of a fabric used as a recycled raw material, and is preferably a constituent atom having an amine structure or an azo structure. In particular, it has been revealed that when the diethylene glycol is contained in amount of less than 0.8% by mass and the nitrogen atom is contained in an amount of 0.5 ppm by mass or more, the slow crystallization rate, which is one defect of the PET resin, can be improved. Therefore, it is essential that the nitrogen atom content is 0.5 ppm by mass or more, and further, is preferably 2.0 ppm by mass or more, more preferably 5.0 ppm by mass or more from a point of improving the crystallization rate. On the other hand, when the nitrogen atom content is excessive, the color tone of the PET resin deteriorates, and the excessive nitrogen atom content becomes a defect during fiber formation, making high-speed spinning more difficult. Therefore, it is essential that the nitrogen atom content is 15.0 ppm by mass or less, and is preferably 10.0 ppm by mass or less from the point of further improving the color tone.

The nitrogen atom content can be measured using, for example, a trace nitrogen analyzer ND-100 manufactured by Mitsubishi Chemical Corporation.

The recycled polyester resin according to the present embodiment has a Hunter color tone: b value of - 10.0 or more and less than 5.0. It is essential that the Hunter color tone: b value of the recycled polyester resin is - 10.0 or more from a point of preventing the fabric from becoming more bluish than a desired color tone when the fibers are woven, processed, and dyed using dyes after the fiber formation. Further, it is essential that the Hunter color tone: b value of the recycled polyester resin is less than 5.0, preferably 4.5 or less, more preferably 4.0 or less, still more preferably 3. 5 or less, and most preferably 3.0 or less from a point of preventing the fabric from becoming more yellowish than a desired color tone when the fibers are woven, processed, and dyed using dyes after the fiber formation. In particular, in a fiber product, since exhibiting a yellowish color in the products dyed in colors other than a yellow system is avoided, it is particularly important to bring the Hunter color tone: b value close to 0 in a recycled polyester that tends to exhibit yellow.

The recycled polyester resin according to the present embodiment preferably has the Hunter color tone: L value of 70.0 or more and less than 85.0. The Hunter color tone: L value of the recycled polyester resin is preferably 70.0 or more, more preferably 73.0 or more, still more preferably 75.0 or more, particularly preferably 76.0 or more, and most preferably 77.0 or more from a point of preventing the fabric from being less vivid than a desired color tone when the fibers are woven, processed, and dyed in chromatic colors using dyes after the fiber formation. Since it is possible to make the Hunter color tone: L value of the recycled polyester resin less than 85.0 even without adding a fluorescent whitening material or the like, the Hunter color tone: L value of the recycled polyester resin is preferably less than 85.0.

The recycled polyester resin according to the present embodiment preferably has a Hunter color tone: a value of - 2.0 or more and 2.0 or less. The Hunter color tone: a value of recycled polyester resin is preferably - 2.0 or more, and more preferably - 1.5 or more from a point of preventing the fabric from becoming more greenish than a desired color tone when the fibers are woven, processed, and dyed using dyes after the fiber formation. The Hunter color tone: a value of recycled polyester resin is preferably 2.0 or less, and more preferably 0 or less from a point of preventing the fabric from becoming more reddish than a desired color tone when the fibers are woven, processed, and dyed using dyes after the fiber formation.

The Hunter color tone: L value, a value, and b value of the recycled polyester resin can be measured, for example, by filling a pellet of the recycled polyester resin into a quartz cell having a height of 20 mm and using a color difference meter SM color computer model SM-T45 manufactured by Suga Test Instruments Co., Ltd. in a transmitted light mode.

A temperature-rise crystallization temperature of the recycled polyester resin according to the present embodiment that is observed when the recycled polyester resin is isothermally held at 280°C for five minutes, quenched to room temperature at a speed of 100°C/min or more, and then heated from 20°C to 280°C at a temperature-rise speed of 16°C/min using a differential scanning calorimeter is preferably 140°C or more and less than 150°C. The temperature-rise crystallization temperature is preferably less than 150°C, more preferably 147°C or less, and still more preferably 145°C or less from a point in which the lower the crystallization temperature is, the faster the crystallization during a drying treatment proceeds, and the more the resin pellets can be prevented from adhering to each other. On the other hand, when the temperature-rise crystallization temperature is excessively low, it is indicated that an excessive amount of foreign matters serving as a crystal nucleus material is present in the resin, making high-speed spinning during the fiber formation more difficult, and therefore the temperature-rise crystallization temperature is preferably 140°C or more, and more preferably 143°C or more.

A temperature-falling crystallization temperature of the recycled polyester resin according to the present embodiment that is observed when the recycled polyester resin is isothermally held at 280°C for five minutes and then cooled at a temperature-rise speed of 16°C/min is preferably more than 190°C and 205°C or less. The temperature-falling crystallization temperature is preferably more than 190°C and more preferably 193°C or more from a point in which the higher the temperature-falling crystallization temperature is, the more crystals are produced when the PET resin is polycondensed, the resin in a molten state is solidified into strands by water cooling, and then processed into pellets, and the more the resin pellets can be prevented from adhering to each other during the drying treatment. On the other hand, when the temperature-falling crystallization temperature is excessively high, it is indicated that an excessive amount of foreign matters serving as the crystal nucleus material is present in the resin, making high-speed spinning during the fiber formation more difficult, and therefore the temperature-falling crystallization temperature is preferably 205°C or less, more preferably 203°C or less, and still more preferably 200°C or less.

A melting point of the recycled polyester resin according to the present embodiment that is observed when the recycled polyester resin is isothermally held at 280°C for five minutes, quenched to room temperature at a speed of 100°C/min or more, and then heated from 20°C to 280°C at a temperature-rise speed of 16°C/min using a differential scanning calorimeter is preferably 253°C or more and 258°C or less. It is preferable that the diethylene glycol and a dicarboxylic acid that is copolymerizable with PET or diol components are contained in a large amount, and the melting point is 253°C or more from a viewpoint of heat resistance. In contrast, since it is not difficult to design the melting point to 258°C or less in the high-purity polyethylene terephthalate, it is preferable that the melting point is 258°C or less.

The recycled polyester resin according to the present embodiment may be a recycled polyester composition containing a coloring pigment or a resin additive such as an antioxidant depending on intended uses. For example, titanium oxide particles may be contained as a pigment, and when a clothing article is processed by containing the titanium oxide particles, it is possible to impart anti-transparent properties. Examples of the antioxidant include [pentaerythritol-tetrakis (3-(3,5-di-t-butyl-4-hydroxyphenol)propionate) (IR1010 (IRGANOX (registered trademark) 1010) manufactured by BASF).

The recycled polyester resin according to the present embodiment is preferably used as a molded processed product such as a bottle, a film, or a fiber by melt molding. In particular, a particularly preferable example is usage as a fiber product because it is possible to reduce the amount of petroleum used in the production of polyester fibers and the environmental burden caused by the incineration of waste clothing by processing the recovered PET fabrics again into the fiber product and recovering the fiber product again after being used by consumers. However, the usage of the molded processed product is not limited.

To produce the recycled polyester resin according to the present embodiment, the fabric used as a recycled raw material is a colored PET (polyethylene terephthalate) fabric. A coloring component in the colored PET fabric is a disperse dye, a cationic dye, or a pigment, and is preferably a disperse dye or a cationic dye.

In the production of the recycled polyester resin according to the present embodiment, a PET component in the colored PET fabric may contain a dicarboxylic acid component other than terephthalic acid and a diol component other than ethylene glycol (EG) as a copolymerization component.

In the production of the recycled polyester resin according to the present embodiment, as the dicarboxylic acid component other than terephthalic acid, dicarboxylic acids such as isophthalic acid, naphthalene dicarboxylic acid, 4,4'-diphenyl dicarboxylic acid, cyclohexane dicarboxylic acid, and 5-sulfoisophthalic acid, and ester-forming derivatives thereof may be copolymerized. From a point of capable of using a cationic dye, it is also preferable to use a component obtained by copolymerizing the dicarboxylic acid of 5-sulfoisophthalic acid and the ester-forming derivative thereof.

In the production of the recycled polyester resin according to the present embodiment, when the dicarboxylic acid of 5-sulfoisophthalic acid and the ester-forming derivative thereof are copolymerized as the PET component in the colored PET fabric, a copolymerization amount thereof is preferably 0.06 mol% or more and 5.0 mol% or less with respect to total dicarboxylic acid components in terms of excellent color tone of the obtained recycled polyester resin. An upper limit value thereof is more preferably 3.5 mol% or less, and still more preferably 2.0 mol% or less from a point of further excellent color tone.

In the present embodiment, with respect to 100 parts by mass of the colored PET fabric, a sulfur atom content in the colored PET fabric is preferably 0.01 parts by mass or more and 0.83 parts by mass or less from a point of excellent color tone of the obtained recycled polyester resin, more preferably 0.59 parts by mass or less, and still more preferably 0.33 parts by mass or less in terms of further excellent color tone. The sulfur atom content in the colored PET fabric can be measured using a fluorescent X-ray analyzer (model number: 3270) manufactured by Rigaku Corporation after melt-molding the colored fabric into a plate shape at 260°C.

In the production of the recycled polyester resin according to the present embodiment, as a diol component other than the EG in the colored PET fabric, diol compounds such as propylene glycol, butanediol, tetramethylene glycol, hexamethylene glycol, diethylene glycol, cyclohexanedimethanol, neopentyl glycol, and polypropylene glycol, and ester-forming derivatives thereof may be copolymerized. An amount of EG in the total diol components is preferably 80 mol% or more.

As a method for producing the recycled polyester resin of the present embodiment, a method of obtaining an ester monomer (BHET) including the following steps (1) to (3), which is a method of obtaining the ester monomer using the colored PET fabric from a point of capable of providing a recycled polyester resin excellent in color tone, heat resistance, and dry property, can be suitably used.
(1) A step of bringing the heated EG into contact with the colored PET fabric to extract a coloring component, the step including steps (a) and (b):
   (a) A step of bringing EG vapor into contact with the colored PET fabric;
   (b) A step of bringing the heated EG of 185°C or more into contact with the colored PET fabric
(2) A step of depolymerizing the PET fabric after extracting the coloring component to obtain an EG solution containing the ester monomer
(3) A purification step of purifying the EG solution containing the ester monomer to obtain the ester monomer

The method for producing the recycled polyester resin of the present embodiment preferably includes the step (1) of bringing the heated EG into contact with the colored PET fabric to extract the coloring component in advance before obtaining the ester monomer by depolymerizing the colored PET fabric, in terms of being able to obtain a BHET and a PET resin which are excellent in color tone.

The step of extracting the coloring component in advance is a step of bringing the heated EG into contact with the colored PET fabric, and the step of contacting the heated EG includes (a) the step of bringing the EG vapor into contact with the colored PET fabric and (b) the step of bringing the heated EG of 185°C or more into contact with the colored PET fabric. When the colored PET fabric is brought into contact with the EG vapor, a PET fiber structure of the colored PET fabric is relaxed, and the extraction of the coloring component is easy. Further, the coloring component is extracted from the relaxed PET fiber by contacting with the heated EG of 185°C or more.

From a point of easy extraction of the coloring component, the heated EG is still more preferably 187°C or more. Although there is no restriction on an upper limit of the temperature, the temperature is preferably 198°C or less, and more preferably 190°C or less from a viewpoint of being able to be performed under a constant pressure. By applying this extraction step, the nitrogen atom content in the recycled polyester resin can be easily controlled in a range of 0.5 ppm by mass or more and 15.0 ppm by mass or less, and the Hunter color tone: b value in the recycled polyester resin can be easily controlled in a range of - 10.0 or more and less than 5.0.

In the method for producing the recycled polyester resin of the present embodiment, (a) contacting with the EG vapor and (b) contacting with the heated EG of 185°C or more may be performed in separate steps, an order of (a) and then (b) is more preferable, but steps (a) and (b) may be performed simultaneously. As a method of performing steps (a) and (b) simultaneously, a reflux method in which a pure EG can be constantly brought into contact with the colored PET fabric and an amount of used EG can be reduced is suitable.

In the method for producing the recycled polyester resin of the present embodiment, an extraction time of the coloring component of the colored PET fabric is preferably 15 minutes or more, more preferably 30 minutes or more, and still more preferably 60 minutes or more. An upper limit time is preferably within 150 minutes from a point of preventing the colored PET fabric from being fragile. In terms of a time allocation when (a) and (b) are not performed simultaneously, a ratio of (a) to (b): (a)/(b) is in a range of 1/9 to 5/5.

The method for producing the recycled polyester resin of the present embodiment includes the step (2) of depolymerizing the PET fabric after the extraction of the coloring component by the EG to obtain the EG solution containing the ester monomer. The depolymerization is preferably performed at 190°C or more and 210°C or less for 1.0 hour or more and 6.0 hours or less at normal pressure adding the EG of 2.0 parts by mass or more and 10.0 parts by mass or less with respect to 1 part by mass of the PET fabric. By performing the depolymerization, the EG solution containing the ester monomer (BHET) can be obtained.

In the method for producing the recycled polyester resin of the present embodiment, when an amount of the EG added at the time of depolymerization is less than 2.0 parts by mass with respect to 1 part by mass of the PET fabric, a molecular weight of the obtained BHET is large, leading to a decrease in yield in the purification step to be performed later and a decrease in efficiency. An amount of the EG to be added is still more preferably 2.3 parts by mass or more, and more preferably 2.5 parts by mass or more with respect to 1 part by mass of the PET fabric. The obtained effect is the same even when the EG is added in an amount of more than 10.0 parts by mass, and therefore it is not preferable from the viewpoint of cost. From the viewpoint of cost, the amount is still more preferably 8.0 parts by mass or less, and more preferably 6.0 parts by mass or less.

In the method for producing the recycled polyester resin of the present embodiment, the temperature in the depolymerization is preferably 190°C or more and 210°C or less, and it is more preferable to perform the depolymerization at 200°C or more from a point of capable of shortening the depolymerization time. From a point of capable of performing the depolymerization efficiently, it is preferable to add sodium hydroxide or sodium carbonate in a range of 0.5% by mass or more to 2.0% by mass or less with respect to 100% by mass of the BHET.

In the method for producing the recycled polyester resin of the present embodiment, from a point of capable of providing a recycled polyester resin excellent in color tone, heat resistance, and dry property, a step of obtaining a purified BHET by purifying the EG solution containing the ester monomer (BHET) obtained by the depolymerization can suitably use a BEHT purification method consisting of the following steps (A) to (D).
(A) A step of removing the EG from the EG solution containing the BHET after the depolymerization to a range of 0 parts by mass or more and 5 parts by mass or less to recover the BHET
(B) A step of dissolving the recovered BHET in hot water of 85°C or more and 100°C or less, followed by hot filtration, after the step described in (A) is performed
(C) A step of cooling a filtration solution of 85°C or more and 100°C or less to 30°C or less, and crystallizing and recovering the ester monomer, after the step described in (B) is performed
(D) A step of performing an activated-carbon treatment or an ion-exchange treatment in a state where the ester monomer is dissolved in hot water in any of the steps (B) and (C)

The ion-exchange treatment means that a target solution is exposed to an ion exchange membrane or an ion exchange resin.

In the method for producing the recycled polyester resin of the present embodiment, it is preferable to perform a step (step (A)) of removing the EG from the BHET after the depolymerization to a range of 0% by mass or more and 5% by mass or less. When the amount of EG in the BHET is more than 5% by mass, the yield deteriorates in a hot filtration step and a crystallization step to be performed later, which is not preferable.

In the step of removing the EG from the BHET after the depolymerization, any of the following methods may be used.

The first method is a reprecipitation step of dropping the EG solution of BHET obtained by the depolymerization into water adjusted to 20°C or less to obtain a cloudy solution and then recovering the BHET containing impurities using a filter. The water temperature is preferably 15°C or less, and still more preferably 10°C or less in terms of increasing the yield.

The second method is a distillation step in which the EG contained in the EG solution obtained by the depolymerization is distilled off and removed to increase the concentration.

In terms of excellent color tone, heat resistance, and dry property of the obtained recycled polyester resin, a reprecipitation step is preferably employed.

In the method for producing the recycled polyester resin of the present embodiment, it is preferable to employ a hot water dissolution step and the hot filtration step (step (B)) to perform the removal of impurities (such as metal compounds represented by titanium oxide and inorganic compounds represented by silica gels) contained in the colored PET fabric. The water is dropped into the recovered BHET obtained in the EG removal step, followed by being heated to 85°C or more and 100°C or less and allowed to pass through the filter, and a transparent high-temperature aqueous solution in which the BHET is dissolved can be obtained.

The method for producing the recycled polyester resin of the present embodiment preferably includes an adsorption step of adding an adsorption material such as activated carbon or ion exchange membranes/ion exchange resins to the transparent high-temperature aqueous solution after the filtration step to perform the removal of impurities in the aqueous solution. That is, a step (step (D)) of performing an activated-carbon treatment or the ion-exchange treatment in a state where the ester monomer is dissolved in hot water is included preferably. An activated-carbon treatment step is more preferable from a point of allowing adsorption regardless of a structure of the coloring component. When it is clear that most of the coloring component is derived from the cationic dye, it is also possible to suitably employ a suitable ion-exchange treatment.

When exposed to the activated carbon or the like, a method in which the solution is allowed to pass through a column filled with the activated carbon or the like or a method in which the activated carbon or the like is directly added to the solution is suitably used. When the column is used, for example, when a 2.5% BHET aqueous solution is allowed to pass therethrough, a solution passing time is preferably 10 minutes or more, preferably 30 minutes or more, and most preferably 60 minutes or more from a point of improving a removal rate of impurities. Meanwhile, from a point of not deteriorating the BHET yield, the liquid passing time is preferably within 180 minutes, more preferably within 120 minutes, and most preferably within 90 minutes.

When the activated carbon or the like is directly added to the solution and the adsorption treatment is performed for 60 minutes to 90 minutes, an addition amount thereof is preferably added in a range of 1% by mass or more and 65% by mass or less with respect to the BHET. From the point of improving the removal rate of impurities, the addition amount of the activated carbon or the like is more preferably 3% by mass or more, still more preferably 5% by mass or more, and most preferably 10% by mass or more. In addition, from a point of reducing an amount of BHET adhering to the activated carbon and improving the yield, the addition amount of the activated carbon or the like is more preferably 40% by mass or less, still more preferably 30% by mass or less, and most preferably 20% by mass or less. After the adsorption treatment is performed, a transparent high-temperature aqueous solution obtained by removing the impurities and the adsorption material such as the activated carbon can be obtained by causing the mixture to pass through the filter, and depending on the types of the adsorption material, it is not essential to cause the mixture to pass through the filter.

The method for producing the recycled polyester resin of the present embodiment preferably includes the crystallization step of cooling the transparent high-temperature aqueous solution after the adsorption treatment and precipitating a solid content of the ester monomer to perform solid-liquid separation. Specifically, it is preferable to include a step (step (C)) of cooling the filtration solution of 85°C or more and 100°C or less to 30°C or less to crystallize and recover the ester monomer.

The method for producing a recycled polyester resin of the present embodiment preferably includes the step (step (D)) of performing the activated-carbon treatment or the ion-exchange treatment on the transparent high-temperature aqueous solution before the crystallization step.

The step (step (D)) of performing the activated-carbon treatment or the ion-exchange treatment is preferably performed in any step of the filtration step (step (B)) and the crystallization step (step (C)).

In the method for producing the recycled polyester resin of the present embodiment, a high-quality ester monomer (BHET) having excellent color tone can be obtained by performing the purification step. By polymerizing the obtained high-quality ester monomer in the presence of a polymerization catalyst by a known PET polycondensation method, a high-quality PET having excellent color tone, heat resistance, and dry property can be produced.

An absorbance intensity as an amount of the coloring component in the ester monomer obtained by the method for producing the recycled polyester resin of the present embodiment can be evaluated using a spectrophotometer, and a peak area observed in a wavelength region of 450 nm to 800 nm can be made 20 or less. The peak area is still more preferably 15 or less, more preferably 10 or less, particularly preferably 5 or less, and most preferably 0.5 or less in view of obtaining a high-quality BHET and PET resin with a small amount of absorbance. A detection lower limit value is 0.1.

In the method for producing the recycled polyester resin of the present invention, an absorbance intensity evaluation using the spectrophotometer is performed as follows. In the sample adjustment used for the evaluation, after preparing a mixed solvent (1: 4) of water and hexafluoroisopropanol, a solution in which the BHET is 10% by mass in the mixed solvent is prepared, and an integrated value of the absorbance intensity of 450 nm to 800 nm is calculated in a wavelength scanning mode using the spectrophotometer, for example, a spectrophotometer U3010 manufactured by Hitachi High-Tech Science Corporation.

The present invention also provides a polyethylene terephthalate molded article made by using the recycled polyester resin of the present embodiment. For example, it is possible to provide a polyethylene terephthalate molded article which can be suitably used for general clothing applications, sports clothing applications, bedding applications, and interior applications by melt-molding the recycled polyester resin of the present embodiment to form fibers.

### EXAMPLES

The present invention will be described below more specifically with reference to Examples and Comparative Examples. The present invention is not limited to Examples and Comparative Examples.

### A. Color Tone Analysis of Fabric and BHET

A sample was placed with a black calibration plate in the background, and a color tone L* value, a* value, and b* value were measured by spectrocolorimeter CM-3700d manufactured by Minolta Co., Ltd.

### B. Coloring Component Content

A mixed solvent (1: 4) of water and hexafluoroisopropanol (HFIP) was prepared, and the mixed solvent was used to adjust a sample concentration: 10% by weight of a solution. When the sample was difficult to dissolve, before the mixed solvent was prepared, the sample was dissolved in the HFIP, and then water was added.

After the sample solution was prepared, the spectrophotometer U3010 manufactured by Hitachi High-Tech Science Corporation was used to measure the absorbance of 450 nm to 800 nm in the wavelength scanning mode, and the integrated value (peak area) of the absorbance intensity was calculated.

### C. Analysis of Sulfur Atom Content (S Amount) in Colored Fabric

The sulfur atom content in the colored fabric was measured using a fluorescent X-ray analyzer (model number: 3270) manufactured by Rigaku Corporation after melt-molding the colored fabric into a plate shape at 260°C.

### D. Color Tone Analysis of Polyester Resin Pellets

The pellet was filled into a quartz cell having a height of 20 mm, and the Hunter color tone: L value, a value, and b value were measured using a color difference meter SM color computer model SM-T45 manufactured by Suga Test Instruments Co., Ltd. in a transmitted light mode.

### E. Analysis of Nitrogen Atom Content (N Atom Amount)

The nitrogen atom content in the recycled polyester resin was measured using a trace nitrogen analyzer ND-100 manufactured by Mitsubishi Chemical Corporation. The sample was introduced into the analyzer, subjected to thermal analysis and oxidation, and the generated nitrogen monoxide was measured with a chemiluminescence method. An electric furnace temperature: 800°C (thermal decomposition part)/900°C (catalyst part), a main oxygen flow rate: 300 mL/min, a sub oxygen flow rate: 300 mL/min, and an argon flow rate: 400 mL/min were set. Quantitative determination was performed based on a calibration curve prepared using a pyridine standard solution.

### F. Analysis of Diethylene glycol (DEG) Amount

1,6-hexanediol, which is an internal standard substance, was added using 2-aminoethanol as a solvent to the recycled polyester resin, followed by being decomposed at 260°C. After cooling, methanol was added, neutralized with acid, and a precipitate was filtered. The filtrate was measured using a gas chromatograph GC-14B manufactured by Shimadzu Corporation.

### G. Analysis of Carboxy Terminal Group Amount

0.5 g of the recycled polyester resin was precisely weighed out, 40 ml of orthocresol was added thereto, followed by being dissolved at 90°C, and titrated with a 0.04 N potassium hydroxide ethanol solution to perform calculation using units of eq/ton. The same operation was repeated five times, and the simple average value was rounded off to the nearest whole number.

### H. Analysis of Intrinsic Viscosity (IV)

The recycled polyester resin was dissolved in an o-chlorophenol solvent to prepare solutions having concentrations of 0.5 g/dL, 0.2 g/dL, and 0.1 g/dL. Thereafter, the relative viscosities (ηr) of the obtained solutions of concentrations C at 25°C were measured using an Uberode viscometer, and (ηr-1)/C was plotted against C. The intrinsic viscosity was calculated by extrapolating the obtained results to a concentration of zero.

### I. Analysis of Crystallization Temperature and Melting Point

About 5 mg of the recycled polyester resin was weighed out, and the temperature-rise crystallization temperature, the temperature-falling crystallization temperature, and the melting point were measured using a differential scanning calorimeter (DSC) Q2000 manufactured by TA Instruments. The measurement was performed three times for one sample, and an average value thereof was defined as the measurement value.

The temperature-rise crystallization temperature was obtained by measuring a temperature observed when performing isothermal holding at 280°C for five minutes, quenching to room temperature at a speed of 100°C/min or more by taking out the sample on an iron plate cooled to room temperature immediately thereafter, and heating from 20°C to 280°C at a temperature-rise speed of 16°C/min using the differential scanning calorimeter.

The temperature-falling crystallization temperature was obtained by measuring a temperature observed when performing isothermal holding at 280°C for five minutes and then cooling at a temperature-rise speed of 16°C/min.

### J. dry property Evaluation

The polyester resin was quenched and solidified into strands having a diameter of 0.7 mm or more and 2.0 mm or less from a molten state, and 1.5 g of a cylindrical recycled polyester resin pellet obtained by being cut to a height of 2.0 mm or more and 4.0 mm or less was put into a test tube having an inner diameter of 14 mm. In this state, after a crystallization treatment was performed at 170°C for 30 minutes in air, the pellets were cooled to room temperature. After cooling, the test tube was sealed with a rubber stopper and vigorously shaken up and down five times, the pellets were taken out, and a weight of the unfused pellets that were not adhered to each other was measured to calculate a weight percent of the unfused pellets with respect to the total weight. The dry property of the pellets having the calculated value of 35 % by weight or more and 100 % by weight or less was defined as "S", the dry property of the pellets having the value of 30 % by weight or more and less than 35 % by weight was defined as "A", and the dry property of the pellets having value of 0 % by weight or more and less than 30 % by weight was defined as "B".

### K. Composition Analysis of Copolymer Polyester

The composition (kind and copolymerization amount of dicarboxylic/diol component) analysis of the polyester composition can be analyzed by performing integration 128 times at a sample concentration of 50 mg of a measurement sample per 1 mL of a heavy solvent, using AL-400 manufactured by JEOL Ltd. as a nuclear magnetic resonance (NMR) and using 1, 1,1,3,3,3-hexafluoro-2-propanol-D2 (heavy hydrogen HFIP) as a heavy solvent. It was confirmed that all of the polyesters obtained in Examples described in the present invention contained the terephthalic acid residues of 95 mol% or more and 100 mol% or less with respect to the total acid components and the ethylene glycol residues of 95 mol% or more and 100 mol% or less with respect to the total diol components.

### (Example 1)

A PET fabric containing 0.3 parts by weight of titanium oxide was stained (130°C, 45 minutes) at a concentration of 6% owf using a dye: TERASII, BLACK WW-KSN, and the obtained black PET fabric was cut to a 1 cm square. One thousand grams of the EG was placed in 2 L 4-neck flask, and a glass tube in which 15 g of the cut black PET fabric was placed was connected. Further, a Dimroth condenser tube was connected to an upper portion of the connected glass tube. Heating was started with an EG setting temperature being 210°C, and EG reflux was performed for 30 minutes to perform extraction of the dye. The temperature of the liquid EG refluxed through the Dimroth condenser tube was 185°C.

The PET fabric after the dye extraction was washed with water, dried, 10 g of the fabric was placed in a 1 L 3-neck flask, 55 g of the EG was added, followed by being stirred, and the depolymerization was performed at an EG temperature of 200°C for 5.5 hours.

When the depolymerization solution was lowered to 100°C or less, 500 mL of water adjusted to 10°C or less was added to obtain a cloudy solution. The obtained cloudy solution was filtered with a 4 µ filter to obtain the BHET containing impurities as a solid content.

The obtained impurity-containing BHET was placed into hot water of 95°C, and filtration was performed again using a 1.6 µ filter. To the obtained transparent filtrate, 10% by weight of the activated carbon of Osaka Gas Chemicals Co., Ltd. with respect to the impurity BHET was added, followed by being heated and stirred, and after 1 hour, the activated carbon was removed using a 1.0 µ filter. The obtained transparent filtrate was cooled to 20°C or less to crystallize the BHET, and solid-liquid separation was performed to obtain a purified BHET as a solid content.

One hundred grams of the purified BHET obtained by repeating the above operations multiple times were used as a raw material and were melted at 250°C, 0.005 % by weight of each of cobalt acetate tetrahydrate and phosphoric acid, 0.03 % by weight of antimony trioxide, and 0.3 % by weight of titanium oxide particles were added thereto, followed by distilling off the EG under reduced pressure while being heated and stirred at 290°C, thereby polymerizing the PET having an intrinsic viscosity (IV) of 0.65.

### (Example 2)

Example 2 was performed in the same manner as in Example 1 except that a PET fabric obtained by copolymerizing sodium sulfoisophthalic acid (SSIA) containing 0.83 parts by weight of sulfur atom amount and 0.3 parts by weight of titanium oxide was used and was stained (120°C, 60 minutes) at a concentration of 4% owf using a dye: Nichilon Black TR200%, and a dye extraction time was 150 minutes.

### (Example 3)

Example 3 was performed in the same manner as in Example 1 except that 4.5 g of the EG was additionally added to increase the melting speed at 250°C in the polymerization of purified BHET in Example 1.

### (Examples 4 to 6)

Examples 4 to 6 were performed in the same manner as in Example 1 except that dye extraction conditions in a decoloring step and the adsorption treatment in the BHET purification in Example 1 were changed as described in Table 1.

### (Example 7)

Example 7 was performed in the same manner as in Example 1 except that a dyeing concentration described in Example 1 was reduced to form a gray fabric, and the dye extraction conditions in the decoloring step were changed as described in Table 1.

### (Example 8)

Example 8 was performed in the same manner as in Example 1 except that a PET fabric obtained by copolymerizing sodium sulfoisophthalic acid containing 0.01 parts by weight of sulfur atom amount and 0.3 parts by weight of titanium oxide was used.

### (Example 9)

Example 9 was performed in the same manner as in Example 1 except that a PET fabric obtained by copolymerizing sodium sulfoisophthalic acid containing 0.83 parts by weight of sulfur atom amount and 0.3 parts by weight of titanium oxide was used and was stained (120°C, 60 minutes) at a concentration of 4% owf using a dye: Nichilon Black TR200%, a dye extraction time was 150 minutes, and an adsorption material used during the purification treatment was changed from activated carbon to an ion exchange resin AMBERLITE IR120BH Manufactured by Organo Corporation.

### (Comparative Example 1)

Comparative Example 1 was performed in the same manner as in Example 1 except that the dye extraction before the depolymerization as in Example 1 was not performed, and the treatment with the adsorption material such as activated carbon was also not performed during the BHET purification treatment.

In Comparative Example 1, the Hunter color tone b value of the polymer was 5 or more, and the hue was inappropriate for the fiber application.

### (Comparative Example 2)

Comparative Example 2 was performed in the same manner as in Example 1 except that the PET fabric was used directly without being dyed as in Example 1, and the treatment with the adsorption material such as activated carbon was not performed during the BHET purification treatment.

In Comparative Example 2, the nitrogen atom content was less than 0.5 ppm by mass, and the dry property was poor.

### (Comparative Example 3)

Comparative Example 3 was performed in the same manner as in Example 2 except that the dye extraction before the depolymerization as in Example 2 was not performed, and the treatment with the adsorption material such as activated carbon was also not performed during the BHET purification treatment.

In Comparative Example 3, the Hunter color tone b value of the polymer was 5 or more, and the hue was inappropriate for the fiber application.

### (Comparative Example 4)

Comparative Example 4 was performed in the same manner as in Example 2 except that the PET fabric was used directly without being dyed as in Example 2, and the treatment with the adsorption material such as activated carbon was not performed during the BHET purification treatment.

In Comparative Example 4, the nitrogen atom content was less than 0.5 ppm by mass, and the dry property was poor.

### (Comparative Example 5)

Comparative Example 5 was performed in the same manner as in Example 1 except that the cut black PET fabric was placed in a 3-neck flask and was decolorized in an EG heated to 180°C in the dye extraction step before the depolymerization in Example 1, and treatment with an adsorption material such as activated carbon was not performed during the BHET purification treatment.

In Comparative Example 5, the color tone of the polymer deteriorated due to a change in the decoloring method.

### (Comparative Example 6)

Comparative Example 6 was performed in the same manner as in Example 1 except that a distillation tube was connected to the glass tube containing the colored PET fabric instead of the Dimroth in the dye extraction step before the depolymerization in Example 1, the EG vapor was refluxed into the flask through the Dimroth connected to another part of the 4-neck flask, and treatment with an adsorption material such as activated carbon was not performed during the BHET purification treatment.

In Comparative Example 6, the color tone of the polymer deteriorated due to a change in the decoloring method.

### (Comparative Examples 7 and 8)

Comparative Examples 7 and 8 were performed in the same manner as in Example 1 except that the dye extraction conditions in Example 1 were changed as described in Table 2 and treatment with an adsorption material such as activated carbon was not performed during the purification treatment.

In Comparative Examples 7 and 8, the Hunter color tone b value of the polymer was 5 or more, and the hue was inappropriate for the fiber application.

### (Comparative Example 9)

Comparative Example 9 was performed in the same manner as in Example 8 except that the treatment with an adsorption material such as activated carbon was not performed during the purification treatment in Example 8.

In Comparative Example 9, the Hunter color tone b value of the polymer was 5 or more, and the hue was inappropriate for the fiber application.

### (Comparative Example 10)

Comparative Example 10 was performed in the same manner as in Example 2 except that the treatment with an adsorption material such as activated carbon was not performed during the purification treatment in Example 2.

In Comparative Example 10, the Hunter color tone b value of the polymer was 5 or more, and the hue was inappropriate for the fiber application.

### (Comparative Example 11)

Comparative Example 11 was performed in the same manner as in Example 1 except that 9.0 g of the EG was additionally added to increase the melting speed at 250°C in the polymerization of purified BHET in Example 1.

In Comparative Example 11, the diethylene glycol content was larger than 0.8% by weight, and the heat resistance and the dry property were poor.

### (Comparative Example 12)

Terephthalic acid and ethylene glycol derived from petroleum (naphtha) were used to polymerize a PET having an intrinsic viscosity (IV) of 0.65 through an esterification reaction and a polycondensation reaction by a known method. The additives used in the polymerization were 0.005 % by weight of each of cobalt acetate tetrahydrate and phosphoric acid, 0.03% by weight of antimony trioxide, and 0.3% by weight of titanium oxide particles.

In Comparative Example 12, since the PET was synthesized from terephthalic acid and ethylene glycol through an esterification reaction, the diethylene glycol content was larger than 0.8% by weight, and the heat resistance and the dry property were poor.

**[Table 1]**

| | | | | Example 1 | Example 2 | Example 3 | Example 4 | Example 5 |
|---|---|---|---|---|---|---|---|---|
| Fabric features | Polymer species | | | PET | co-PET | PET | PET | PET |
| | SSIA amount | | (mol%) | 0.00 | 5.00 | 0.00 | 0.00 | 0.00 |
| | S amount | | (Parts by weight) | 0.00 | 0.83 | 0.00 | 0.00 | 0.00 |
| | Color | | - | Black | Black | Black | Black | Black |
| | Color tone | L* | - | 17.5 | 14.5 | 17.5 | 17.5 | 17.5 |
| | | a* | - | 0.0 | 0.5 | 0.0 | 0.0 | 0.0 |
| | | b* | - | -2.0 | -1.5 | -2.0 | -2.0 | -2.0 |
| Decoloring step | Decoloring time | | Minutes | 30 | 150 | 30 | 60 | 60 |
| | EG vapor | | - | ○ | ○ | ○ | ○ | ○ |
| | Heated EG temperature | | °C | 185 | 185 | 185 | 185 | 185 |
| BHET purification step | Activated carbon addition amount | | wt% | 10 | 10 | 10 | 20 | 10 |
| | Cationic exchange resin addition amount | | wt% | 0 | 0 | 0 | 0 | 0 |
| BHET features | Color tone | L* | - | 96.0 | 95.0 | 96.0 | 98.0 | 97.0 |
| | | a* | - | -0.5 | -1.0 | -0.5 | -0.5 | -0.5 |
| | | b* | - | 1.5 | 2.0 | 1.5 | 1.5 | 1.5 |
| | Spectrophotometer peak area | | - | 0.5 | 0.4 | 0.5 | 0.2 | 0.3 |
| | SSIA amount | | mol% | 0 | 0 | 0 | 0 | 0 |
| | N atom amount | | ppm | 15.0 | 15.0 | 15.0 | 0.5 | 5.0 |
| | DEG amount | | wt% | 0.2 | 0.2 | 0.7 | 0.2 | 0.2 |
| | COOH terminal group amount | | eq/t | 14 | 13 | 16 | 14 | 14 |
| | Intrinsic viscosity (IV) | | - | 0.65 | 0.65 | 0.65 | 0.65 | 0.65 |
| | Thermal properties | Temperature-rise crystallization temperature | °C | 143 | 143 | 149 | 148 | 147 |
| Polymer features | | Temperature-falling crystallization temperature | °C | 203 | 204 | 191 | 191 | 200 |
| | | Melting point | °C | 255 | 255 | 254 | 255 | 255 |
| | | Unfused rate | % | 46 | 45 | 30 | 32 | 37 |
| | | Drying property evaluation | - | S | S | A | A | S |
| | Hunter color tone | L | - | 75.0 | 74.0 | 74.5 | 77.0 | 76.0 |
| | | a | - | -1.5 | -1.5 | -1.0 | -1.0 | -1.0 |
| | | b | - | 4.5 | 4.5 | 4.5 | 3.0 | 3.5 |

**[Table 1] (continued)**

| | | | | Example 6 | Example 7 | Example 8 | Example 9 | Comparative Example 1 | Comparative Example 2 |
|---|---|---|---|---|---|---|---|---|---|
| Fabric features | Polymer species | | | PET | PET | co-PET | co-PET | PET | PET |
| | SSIA amount | | (mol%) | 0.00 | 0.00 | 0.06 | 5.00 | 0.00 | 0.00 |
| | S amount | | (Parts by weight) | 0.00 | 0.00 | 0.01 | 0.83 | 0.00 | 0.00 |
| | Color | | - | Black | Gray | Black | Black | Black | White (Nonstained) |
| | Color tone | L* | - | 17.5 | 50.5 | 17.5 | 14.5 | 17.5 | 94.5 |
| | | a* | - | 0.0 | 0.5 | 0.0 | 0.5 | 0.0 | 3.0 |
| | | b* | - | -2.0 | 3.0 | -2.0 | -1.5 | -2.0 | -12.0 |
| Decoloring step | Decoloring time | | Minutes | 15 | 15 | 30 | 150 | 0 | 30 |
| | EG vapor | | - | ○ | ○ | ○ | ○ | - | ○ |
| | Heated EG temperature | | °C | 185 | 185 | 185 | 185 | - | 185 |
| BHET purification step | Activated carbon addition amount | | wt% | 20 | 0 | 10 | 0 | 0 | 0 |
| | Cationic exchange resin addition amount | | wt% | 0 | 0 | 0 | 10 | 0 | 0 |
| BHET features | Color tone | L* | - | 96.5 | 96.5 | 95.5 | 97.5 | 63.0 | 94.0 |
| | | a* | - | -0.5 | -0.5 | -0.5 | -0.5 | 5.5 | 0.5 |
| | | b* | - | 1.5 | 1.5 | 1.5 | 1.5 | 19.0 | 1.0 |
| | Spectrophotometer peak area | | - | 0.4 | 0.4 | 0.5 | 0.3 | 30.0 | 0.1 |
| | SSIA amount | | mol% | 0 | 0 | 0 | 0 | 0 | 0 |
| | N atom amount | | ppm | 10.0 | 10.0 | 15.0 | 2.0 | 230.0 | 0.0 |
| | DEG amount | | wt% | 0.2 | 0.3 | 0.2 | 0.3 | 0.3 | 0.2 |
| | COOH terminal group amount | | eq/t | 14 | 14 | 13 | 14 | 14 | 13 |
| | Intrinsic viscosity (IV) | | - | 0.65 | 0.65 | 0.65 | 0.65 | 0.65 | 0.65 |
| | Thermal properties | Temperature-rise crystallization temperature | °C | 145 | 144 | 144 | 148 | 135 | 151 |
| Polymer features | | Temperature-falling crystallization temperature | °C | 202 | 203 | 203 | 193 | 208 | 189 |
| | | Melting point | °C | 255 | 255 | 255 | 255 | 255 | 255 |
| | | Unfused rate | % | 41 | 43 | 45 | 35 | 55 | 29 |
| | | Drying property evaluation | - | S | S | S | S | S | B |
| | Hunter color tone | L | - | 72.5 | 73.0 | 74.5 | 76.5 | 41.0 | 77.5 |
| | | a | - | -1.5 | -1.5 | -1.0 | -1.5 | 13.0 | -1.0 |
| | | b | - | 4.0 | 4.0 | 4.5 | 3.5 | 21.5 | 2.5 |

**[Table 2]**

| | | | | Comparative Example 3 | Comparative Example 4 | Comparative Example 5 | Comparative Example 6 | Comparative Example 7 |
|---|---|---|---|---|---|---|---|---|
| Fabric features | Polymer species | | | co-PET | co-PET | PET | PET | PET |
| | SSIA amount | | (mol%) | 5.00 | 5.00 | 0.00 | 0.00 | 0.00 |
| | S amount | | (Parts by weight) | 0.83 | 0.83 | 0.00 | 0.00 | 0.00 |
| | Color | | - | Black | White (Nonstained) | Black | Black | Black |
| | Color tone | L* | - | 14.5 | 93.5 | 17.5 | 17.5 | 17.5 |
| | | a* | - | 0.5 | -1.0 | 0.0 | 0.0 | 0.0 |
| | | b* | - | -1.5 | 4.5 | -2.0 | -2.0 | -2.0 |
| Decoloring step | Decoloring time | | Minutes | 0 | 150 | 30 | 30 | 30 |
| | EG vapor | | - | - | ○ | - | ○ | ○ |
| | Heated EG temperature | | °C | - | 185 | 180 | - | 185 |
| BHET purification step | Activated carbon addition amount | | wt% | 0 | 0 | 0 | 0 | 0 |
| | Cationic exchange resin addition amount | | wt% | 0 | 0 | 0 | 0 | 0 |
| BHET features | Color tone | L* | - | 74.0 | 97.0 | 90.0 | 70.0 | 93.0 |
| | | a* | - | -13.5 | 0.0 | 1.0 | 5.0 | -2.0 |
| | | b* | - | -2.0 | 1.5 | 2.5 | 15.0 | 3.0 |
| | Spectrophotometer peak area | | - | 50.0 | 0.1 | 5.0 | 28.0 | 3.0 |
| | SSIA amount | | mol% | 0 | 0 | 0 | 0 | 0 |
| | N atom amount | | ppm | 380.0 | 0.0 | 40.0 | 220.0 | 30.0 |
| | DEG amount | | wt% | 0.3 | 0.2 | 0.2 | 0.3 | 0.2 |
| | COOH terminal group amount | | eq/t | 15 | 14 | 13 | 14 | 15 |
| | Intrinsic viscosity (IV) | | - | 0.65 | 0.65 | 0.65 | 0.65 | 0.65 |
| | Thermal properties | Temperature-rise crystallization temperature | °C | 133 | 152 | 137 | 135 | 137 |
| Polymer features | | Temperature-falling crystallization temperature | °C | 210 | 185 | 210 | 208 | 208 |
| | | Melting point | °C | 255 | 255 | 255 | 255 | 255 |
| | | Unfused rate | % | 56 | 28 | 48 | 54 | 47 |
| | | Drying property evaluation | - | S | B | S | S | S |
| | Hunter color tone | L | - | 38.0 | 77.0 | 60.5 | 45.0 | 67.5 |
| | | a | - | 11.5 | -1.5 | 0.5 | 12.0 | 0.0 |
| | | b | - | 17.5 | 2.0 | 9.5 | 20.0 | 7.0 |

**[Table 2] (continued)**

| | | | | Comparative Example 8 | Comparative Example 9 | Comparative Example 10 | Comparative Example 11 | Comparative Example 12 |
|---|---|---|---|---|---|---|---|---|
| Fabric features | Polymer species | | | PET | co-PET | co-PET | PET | - |
| | SSIA amount | | (mol%) | 0.00 | 0.06 | 5.00 | 0.00 | - |
| | S amount | | (Parts by weight) | 0.00 | 0.01 | 0.83 | 0.00 | - |
| | Color | | - | Black | Black | Black | Black | - |
| | Color tone | L* | - | 17.5 | 17.5 | 14.5 | 17.5 | - |
| | | a* | - | 0.0 | 0.0 | 0.5 | 0.0 | - |
| | | b* | - | -2.0 | -2.0 | -1.5 | -2.0 | - |
| Decoloring step | Decoloring time | | Minutes | 60 | 30 | 150 | 30 | - |
| | EG vapor | | - | ○ | ○ | ○ | ○ | - |
| | Heated EG temperature | | °C | 185 | 185 | 185 | 185 | - |
| BHET purification step | Activated carbon addition amount | | wt% | 0 | 0 | 0 | 10 | - |
| | Cationic exchange resin addition amount | | wt% | 0 | 0 | 0 | 0 | - |
| BHET features | Color tone | L* | - | 94.0 | 92.0 | 91.5 | 96.0 | 92.0 |
| | | a* | - | -1.5 | -2.0 | -1.0 | -0.5 | -1.0 |
| | | b* | - | 2.5 | 3.0 | 3.5 | 1.5 | 1.5 |
| | Spectrophotometer peak area | | - | 1.5 | 3.0 | 3.0 | 0.5 | 0.1 |
| | SSIA amount | | mol% | 0 | 0 | 0 | 0 | 0 |
| | N atom amount | | ppm | 20.0 | 30.0 | 20.0 | 15.0 | 0.0 |
| | DEG amount | | wt% | 0.2 | 0.2 | 0.2 | 0.9 | 1.0 |
| | COOH terminal group amount | | eq/t | 15 | 14 | 13 | 19 | 20 |
| | Intrinsic viscosity (IV) | | - | 0.65 | 0.65 | 0.65 | 0.65 | 0.65 |
| | Thermal properties | Temperature-rise crystallization temperature | °C | 138 | 138 | 139 | 151 | 152 |
| Polymer features | | Temperature-falling crystallization temperature | °C | 206 | 208 | 206 | 188 | 179 |
| | | Melting point | °C | 255 | 255 | 255 | 252 | 253 |
| | | Unfused rate | % | 47 | 48 | 48 | 26 | 25 |
| | | Drying property evaluation | - | S | S | S | B | B |
| | Hunter color tone | L | - | 70.0 | 65.0 | 63.0 | 74.5 | 80.0 |
| | | a | - | -1.0 | 0.0 | 0.5 | -1.0 | -1.5 |
| | | b | - | 6.5 | 7.5 | 6.0 | 4.5 | 1.5 |

Although various embodiments have been described above with reference to the drawings, it is obvious that the present invention is not limited to the examples. It is apparent to those skilled in the art that various variations or modifications can be conceived within the scope described in the claims, and it should be naturally understood that those belong to the technical scope of the present invention. In addition, the components in the above embodiments may be combined optionally without departing from the spirit of the invention.

The present application is based on a Japanese patent application (JP2022-039894) filed on March 15, 2022, and the contents thereof are incorporated herein by reference.

### INDUSTRIAL APPLICABILITY

In the present invention, a PET resin that has excellent heat resistance and dry property as compared with a PET resin made from a virgin raw material according to a known method, and that is a recycled polyester resin having excellent color tone and using a recovered PET fabric as a raw material is obtained, and the PET resin can be suitably used for general clothing applications, sports clothing applications, bedding applications, and interior applications by being melt-molded into fibers.

## Claims

1. A recycled polyester resin using a colored PET fabric as a raw material, wherein
the recycled polyester resin is a polyethylene terephthalate resin containing a terephthalic acid residue of 88 mol% or more and 100 mol% or less with respect to a total acid component and an ethylene glycol residue of 88 mol% or more and 100 mol% or less with respect to a total diol component and satisfying the following features (1) to (3):
(1) a diethylene glycol content is 0.1% by mass or more and less than 0.8% by mass;
(2) a nitrogen atom content is 0.5 ppm by mass or more and 15.0 ppm by mass or less; and
(3) A Hunter color tone: b value is - 10.0 or more and less than 5.0.

2. The recycled polyester resin according to claim 1, satisfying the following features (4) and (5):
(4) a Hunter color tone: L value is 70.0 or more and less than 85.0; and
(5) a Hunter color tone: a value is - 2.0 or more and 2.0 or less.

3. The recycled polyester resin according to claim 1, further satisfying the following features (6) and (7):
(6) a temperature-rise crystallization temperature, which is observed when performing isothermal holding at 280°C for five minutes, quenching to room temperature at a speed of 100°C/min or more, and then heating from 20°C to 280°C at a temperature-rise speed of 16°C/min using a differential scanning calorimeter, is 140°C or more and less than 150°C; and
(7) a temperature-falling crystallization temperature, which is observed when performing isothermal holding at 280°C for five minutes and then cooling at a temperature-rise speed of 16°C/min, is more than 190°C and 205°C or less.

4. A polyethylene terephthalate molded article made by using the recycled polyester resin according to claim 1 or 3.

5. A method for obtaining an ester monomer by using a colored PET fabric, the method comprising the following steps (1) to (3):
(1) a step of bringing a heated EG into contact with the colored PET fabric to extract a coloring component, the step comprising the following steps (a) and (b):
(a) a step of bringing EG vapor into contact with the colored PET fabric; and
(b) a step of bringing the heated EG of 185°C or more into contact with the colored PET fabric;
(2) a step of depolymerizing the PET fabric after extracting the coloring component to obtain an EG solution containing the ester monomer; and
(3) a purification step of purifying the EG solution containing the ester monomer to obtain the ester monomer.

6. The method for obtaining an ester monomer according to claim 5, wherein a step of purifying the EG solution containing the ester monomer (BHET) obtained by the depolymerization to obtain a purified BHET consists of the following steps (A) to (D):
(A) a step of removing the EG from the EG solution containing the BHET after the depolymerization to a range of 0% by mass or more and 5% by mass or less to recover the BHET;
(B) a step of dissolving the recovered BHET in hot water of 85°C or more and 100°C or less, followed by hot filtration, after the step described in (A) is performed;
(C) a step of cooling a filtration solution of 85°C or more and 100°C or less to 30°C or less, and crystallizing and recovering the ester monomer, after the step described in (B) is performed; and
(D) a step of performing an activated-carbon treatment or an ion-exchange treatment in a state where the ester monomer is dissolved in hot water in any of the steps (B) and (C).

7. The method for obtaining an ester monomer according to claim 5 or 6, wherein a peak area, which is observed in a range of 450 nm to 800 nm by a spectrophotometer, is 20 or less as a coloring component amount in the obtained ester monomer.

8. The method for obtaining an ester monomer according to claim 5 or 6, wherein the PET fabric after extracting the coloring component is depolymerized by the EG of 2.0 parts by mass or more and 10.0 parts by mass or less with respect to 1 part by mass of the PET fabric.

9. The method for obtained an ester monomer according to claim 5 or 6, wherein a sulfur atom amount, which is contained in 100 parts by mass of the colored PET fabric, is 0.01 parts by mass or more and 0.83 parts by mass or less.
